# EUROPEAN PATENT APPLICATION

(11) **EP 1 833 007 A2**
(43) Date of publication of application: **12.09.2007**
(21) Application number: 06026994.1
(22) Date of filing: 28.12.2006
(51) Int. Cl.: G06Q 10/00, G04G 9/00

(54) **Method of updating daylight saving time information in wireless terminals**

(30) Priority: 06.03.2006 KR 20060020886
(71) Applicant: Samsung Electronics Co., Ltd., Suwon-si, Gyeonggi-Do (KR)
(72) Inventor: Kim, June-Yeob c/o Samsung Electronics Co.,Ltd., Suwon-si, Gyeonggi-do (KR)
(74) Representative: Lang, Johannes

(57) **Abstract**

A method of updating DST information in a wireless terminal is provided, whereby the wireless terminal correctly and conveniently provides world time in consideration of the DST information. The method includes the steps of: transmitting, by a second server receiving DST information in real-time, the received DST information to the wireless terminal; and if the DST information is received, updating, by the wireless terminal, DST information of the wireless terminal based on the received DST information. The method also includes the steps of: requesting, by the wireless terminal, a second server for an update of DST information; if the DST information update request is received from the wireless terminal, transmitting, by the second server, DST information, which is received in real-time, to the wireless terminal; and if the DST information is received from the second server, updating, by the wireless terminal, DST information of the wireless terminal based on the DST information received from the second server.

## Description

### BACKGROUND OF THE INVENTION

### Field of the Invention:

The present invention relates to a method of updating daylight saving time (DST) information in a wireless terminal. More particularly, the present invention relates to a method of updating DST information in a wireless terminal, whereby the wireless terminal correctly and conveniently provides world time while accounting for DST.

### Description of the Related Art:

Historically, the function of a wireless terminal has been to place and receive voice telephone calls. However, as a result of technological advancements and the convergence of technologies, wireless terminals have evolved to include additional functions such as a world time function. For a world time function, a current time of given city is automatically calculated by taking into account a time difference and DST information of a nation to which the city belongs.

In general, to check a current time in a specific nation using a wireless terminal, a user selects a world time menu and then a city to be checked. The wireless terminal then automatically calculates a current time of the selected city based on previously stored time difference and DST information of various cities around the world. Thus, when the user selects a city of a particular nation to be checked, a current time of the city is displayed to the user.

The DST Information, such as times and dates, of each city is previously stored in a wireless terminal or manually set by a user. For example, if a user selects the world time menu and then a city to be checked, a wireless terminal automatically calculates a current time of the selected city.

However, it is very inconvenient and troublesome for a user to directly set the DST Information of each city for world time as described above. In addition, if the DST Information is previously stored in a wireless terminal, the user does not know whether the stored DST information is valid. This is because a start and end time of the DST period may be changed in a selected nation.

Further, a nation which currently does not use DST may use DST in the future, or a nation currently using DST may choose to discontinue its use. Thus, if DST information of some nations has changed, the wireless terminal cannot provide correct world time to the user.

For example, although Korea currently does not use DST, DST was effective from 1949 to 1961, and in 1987 and 1988 for the Seoul Olympics of 1988. In addition, in the United States in which DST is currently used, 4 weeks will be added to the DST starting 2007.

Accordingly, there is a need for an improved method of updating DST information in a wireless terminal, whereby the wireless terminal correctly and conveniently provides world time while accounting for DST.

### SUMMARY OF THE INVENTION

Exemplary embodiments of the present invention address at least the above problems and/or disadvantages and provide at least the advantages described below. Accordingly, an aspect of an exemplary embodiment of the present invention is to provide a method of updating Daylight Saving Time (DST) information in a wireless terminal, whereby the wireless terminal correctly and conveniently provides world time in consideration the DST information.

According to one aspect of an exemplary embodiment of the present invention, there is provided a method of updating DST information in a wireless terminal, the method comprising the steps of: transmitting, by a second server receiving DST information, the received DST information to the wireless terminal; and if the DST information is received, updating, by the wireless terminal, DST information of the wireless terminal based on the received DST information.

According to another aspect of an exemplary embodiment of the present invention, there is provided a method of updating DST information in a wireless terminal. The method comprising the steps of if DST information, which is received by a second server, has changed, requesting, by the second server, a connection with the wireless terminal by transmitting a message informing of the DST information change; if the second server is connected to the wireless terminal, requesting, by the second server, DST information stored in the wireless terminal; if the DST information of the wireless terminal is received, comparing, by the second server, the changed DST information to the DST information of the wireless terminal; if the changed DST information is different from the DST information of the wireless terminal, transmitting, by the second server, the changed DST information to the wireless terminal; and if the DST information is received, updating, by the wireless terminal, the DST information of the wireless terminal based on the received DST information.

According to another aspect of an exemplary embodiment of the present invention, there is provided a method of updating DST information in a wireless terminal The method comprising the steps of requesting, by the wireless terminal, an update of DST information fro the second server; if the DST information update request is received from the wireless terminal, transmitting, by the second server, DST information to the wireless terminal; and if the DST information is received from the second server, updating, by the wireless terminal, DST information of the wireless terminal based on the DST information received from the second server.

According to another aspect of an exemplary embodiment of the present invention, there is provided a method of updating DST information in a wireless terminal. The method comprising the steps of if DST information, which is received by a second server, has changed, requesting, by the second server, a connection with the wireless terminal by transmitting a message informing of the DST information change; if the second server is connected to the wireless terminal, transmitting, by the second server, the changed DST information to the wireless terminal; if the DST information is received from the second server, comparing, by the wireless terminal, the DST information received from the second server to DST information of the wireless terminal; if the DST information received from the second server is different from the DST information of the wireless terminal, updating, by the wireless terminal, the DST information of the wireless terminal based on the DST information received from the second server.

According to another aspect of an exemplary embodiment of the present invention, there is provided a method of updating DST information in a wireless terminal. The method comprising the steps of if DST information, which is received by a server, has changed, requesting, by the server, a connection with the wireless terminal by transmitting a message informing of the DST information change; if the server is connected to the wireless terminal, requesting, by the server, DST information stored in the wireless terminal; if the DST information of the wireless terminal is received, comparing, by the server, the changed DST information to the DST information of the wireless terminal; if the changed DST information is different from the DST information of the wireless terminal, transmitting, by the server, the changed DST information to the wireless terminal.

According to another aspect of an exemplary embodiment of the present invention, there is provided a method of updating DST information in a wireless terminal. The method comprising the steps of if DST information, which is received by a server, has changed, storing the changed DST information; and transmitting, by the server, the changed DST information to the wireless terminal.

According to another aspect of an exemplary embodiment of the present invention, there is provided a method of updating DST information in a wireless terminal. The method comprising the steps of if the DST information is received from a server, comparing, by the wireless terminal, the DST information received from the server to DST information of the wireless terminal; and if the DST information received from the server is different from the DST information of the wireless terminal, updating, by the wireless terminal, the DST information of the wireless terminal based on the DST information received from the server.

According to another aspect of an exemplary embodiment of the present invention, there is provided a method of updating DST information in a wireless terminal. The method comprising the steps of receiving, by the wireless terminal, DST information from a server; updating, by the wireless terminal, the DST information of the wireless terminal based on the DST information received from the server; receiving, by the wireless terminal, a request for DST information update result information from the server; and transmitting, by the wireless terminal, the DST information update result information to the server.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of the present invention will become more apparent from the following description taken in conjunction with the accompanying drawings, in which:
FIG. 1 is a diagram for describing a basic concept of Synchronization Markup Language (SyncML) Device Management (DM);
FIG. 2 is a flowchart illustrating a method of updating daylight saving time (DST) information in a wireless terminal according to a first preferred exemplary embodiment of the present invention;
FIG. 3 is a flowchart illustrating a method of updating DST information in a wireless terminal according to a second preferred exemplary embodiment of the present invention; and
FIG. 4 is a flowchart illustrating a method of updating DST information in a wireless terminal according to a third preferred exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

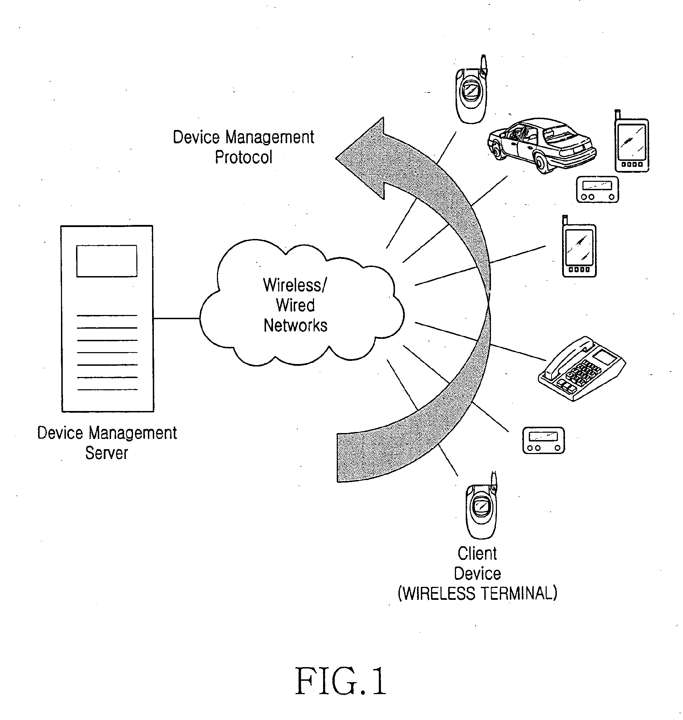

FIG. 1 is a diagram for describing a basic concept of Synchronization Markup Language (SyncML) Device Management (DM). The proliferation of the use of wireless terminals has increased the need for wireless terminal management.

Wireless terminal management is achieved using a wireless terminal management server for managing a plurality of wireless terminals in a management center, and thus, a user can easily and reliably use a wireless terminal. In addition, a service provider providing a mobile communication service can help a user to reliably and effectively use a wireless terminal using wireless terminal management.

Because of the above description, wireless terminal management become a necessity. As a result, the Open Mobile Alliance (OMA), an alliance of wireless communication related companies which establishes standards for wireless communication technologies, has announced SyncML DM. SyncML is a SyncML-based mobile communication terminal management standard. The SyncML DM standard is established by expanding SyncML Data Synchronization (DS), which is a data synchronization technique in a mobile communication environment, for management which is performed by exchanging information between a management server and a management agent.

Recently, SyncML DM is being used for updating a configuration and for upgrading software for executing applications, such as a Wireless Application Protocol (WAP), a Multimedia Messaging Service (MMS), and E-mail, in wireless terminals.

In the exemplary embodiments of the present invention, it is assumed that DST information for each city of each nation is automatically updated in a wireless terminal using SyncML DM. In addition, it is assumed that a DM server receives DST information in real-time from a DST server for managing and controlling the DST information. However, the DM server can include the DST server or have a function of managing and controlling the DST information.

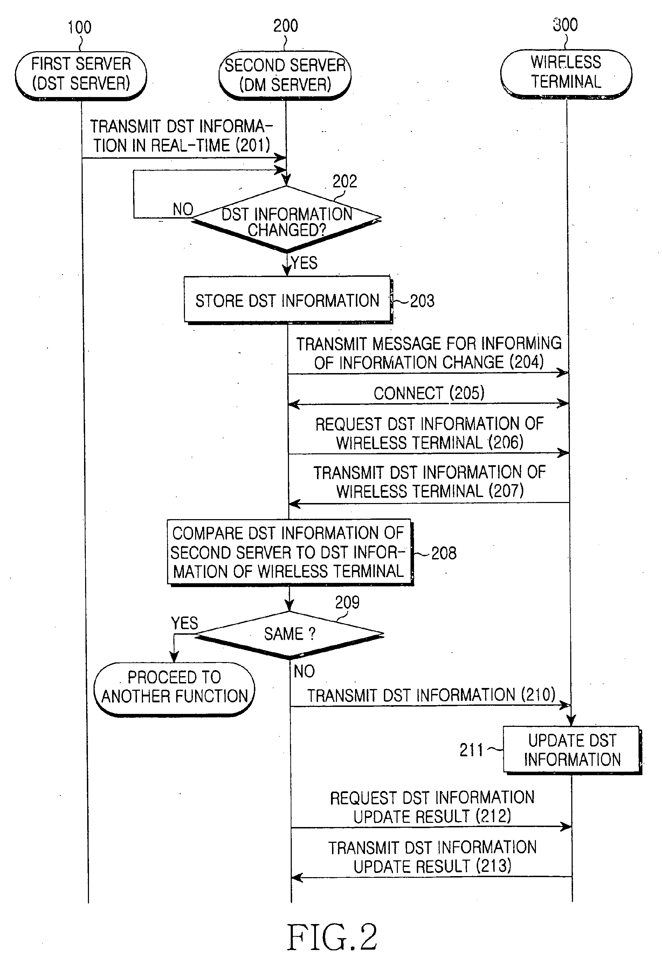

FIG. 2 is a flowchart illustrating a method of updating DST information in a wireless terminal 300 according to a first preferred exemplary embodiment of the present invention, wherein the DST information of the wireless terminal is automatically updated.

Referring to FIG. 2, a first server 100, which is a server for managing and controlling DST information, transmits the DST information to a second server 200 in real-time in step 201. The second server 200, which is a SyncML DM server, receives the DST information from the first server 100 in real-time and compares the DST information received from the first server 100 to previous DST information stored therein. If the DST information received from the first server 100 is different from the previous DST information stored in the second server 200 as a result of the comparison, the second server 200 senses in step 202 that the DST information has been changed and stores the DST information received from the first server 100 in a memory thereof in step 203.

Alternatively, when DST information is received from the first server 100, the second server 200 can store the received DST information in the memory thereof in step 203 without performing the comparison of step 202.

The second server 200, which has sensed that the DST information received from the first server 100 has been changed, transmits the message for informing of an information change to the wireless terminal 300 in step 204. Although it is illustrated in the first preferred exemplary embodiment that the second server 200 transmits the information change message for the DST information update to the wireless terminal 300 only if a change occurs in DST information received from the first server 100, the second server 200 can automatically transmit the information change message for the DST information update to the wireless terminal 300 every predetermined period of time or at select triggering events.

The wireless terminal 300, which has received the message for informing of an information change from the second server 200, automatically tries to connect to the second server 200, displays the message for informing of an information change to a user of the wireless terminal 300 and automatically tries to connect to the second server 200, or tries to connect to the second server 200 according to a selection of the user.

When the second server 200 and the wireless terminal 300 axe connected to each other in step 205 according to the connection request of the wireless terminal 300, the second server 200 requests the wireless terminal 300 for DST information stored in the wireless terminal 300 in step 206.

In step 206, the second server 200 can request the wireless terminal 300 for only DST information of a specific nation, which is determined as DST information changed among the DST information received from the first server 100, or entire DST information stored in the wireless terminal 300.

The wireless terminal 300, which has received the DST information request from the second server 200, transmits DST information stored in a memory thereof, i.e., the DST information of the specific nation or entire DST information, to the second server 200 in step 207.

The second server 200, which has received the DST information from the wireless terminal 300, compares the DST information received from the wireless terminal 300 to the DST information stored in the memory thereof in step 208.

If the DST information received from the wireless terminal 300 is different from the DST information stored in the memory of the second server 200 as a result of the comparison of step 208, the second server 200 senses the difference in step 209, transmits the changed DST information, which is stored in the memory thereof, to wireless terminal 300 in step 210. If the DST information received from the wireless terminal 300 is the same from the DST information stored in the memory of the second server 200 as a result of the comparison of step 208, another function is performed.

The wireless terminal 300, which has received the changed DST information from the second server 200, updates the DST information stored in the memory thereof based on the received DST information in step 211. The wireless terminal 300 can automatically calculate a current time of a nation having DST with the updated DST information.

If the second server 200 transmits a message of a DST information update result request to the wireless terminal 300 in step 212, the wireless terminal 300 transmits the updated DST information to the second server 200 in step 213.

If the updated DST information received from the wireless terminal 300 is different from the DST information transmitted by the second server 200, the second server 200 can retransmit the changed DST information to the wireless terminal 300 by repeating steps 210-213.

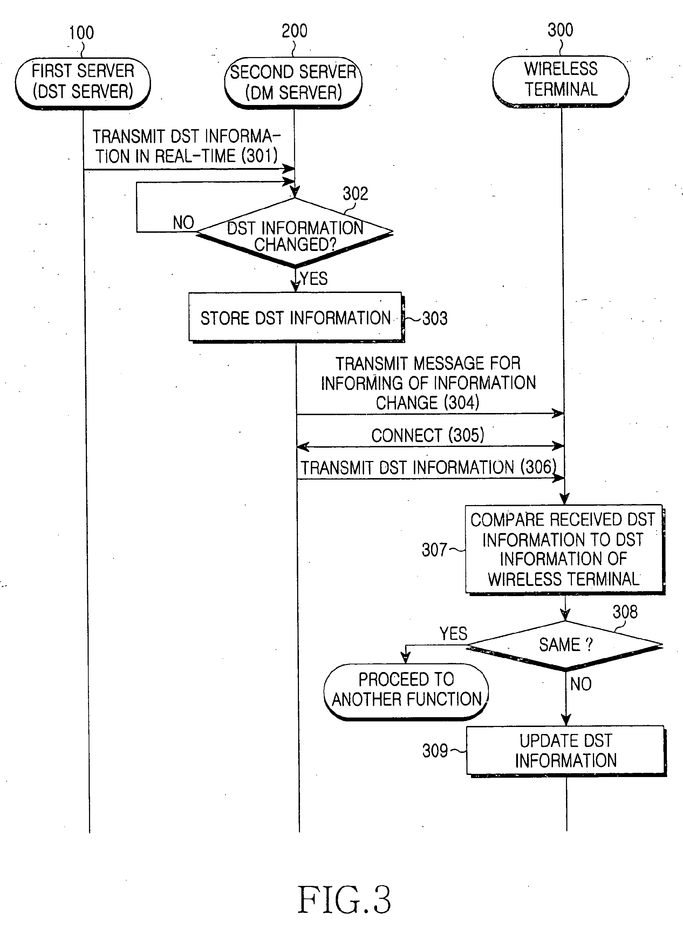

FIG. 3 is a flowchart illustrating a method of updating DST information in a wireless terminal 300 according to a second preferred exemplary embodiment of the present invention, wherein the DST information of the wireless terminal is automatically updated.

Referring to FIG. 3, a first server 100, which is a server for managing and controlling DST information, transmits the DST information to a second server 200 in real-time in step 301. The second server 200, which is a SyncML DM server, receives the DST information from the first server 100 in real-time and compares the DST information received from the first server 100 to previous DST information stored therein. If the DST information received from the first server 100 is different from the previous DST information stored in the second server 200 as the comparison result, the second server 200 senses in step 302 that the DST information has been changed and stores the DST information received from the first server 100 in a memory thereof in step 303.

Alternatively, when DST information is received from the first server 100, the second server 200 can store the received DST information in the memory thereof in step 303 without performing the comparison of step 302.

The second server 200, which has sensed that the DST information received from the first server 100 has been changed, transmits the message for informing of an information change to the wireless terminal 300 in step 304. Although it is illustrated in the second preferred exemplary embodiment that the second server 200 transmits the information change message for the DST information update-to the wireless terminal 300 only if a change occurs in DST information received from the first server 100, the second server 200 can automatically transmit the information change message for the DST information update to the wireless terminal 300 every predetermined period of time or at select triggering events.

The wireless terminal 300, which has received the message for informing of an information change from the second server 200, automatically tries to connect to the second server 200, displays the message for informing of an information change to a user of the wireless terminal 300 and automatically tries to connect to the second server 200, or tries to connect to the second server 200 according to a selection of the user.

When the second server 200 and the wireless terminal 300 are connected to each other in step 305 according to the connection request of the wireless terminal 300, the second server 200 transmits the changed DST information stored therein to the wireless terminal 300 in step 306.

The wireless terminal 300, which has received the changed DST information from the second server 200, compares the DST information received from the second server 200 to DST information stored in a memory thereof in step 307.

If the DST information received from the second server 200 is different from the DST information stored in the memory of the wireless terminal 300 as a result of the comparison of step 307, the wireless terminal 300 senses the difference in step 308, updates the DST information stored in the memory thereof based on the received DST information in step 309. If the DST information received from the wireless terminal 300 is the same from the DST information stored in the memory of the second server 200 as a result of the comparison of step 308, another function is performed. The wireless terminal 300 can automatically calculate a current time of a nation having DST with the updated DST information.

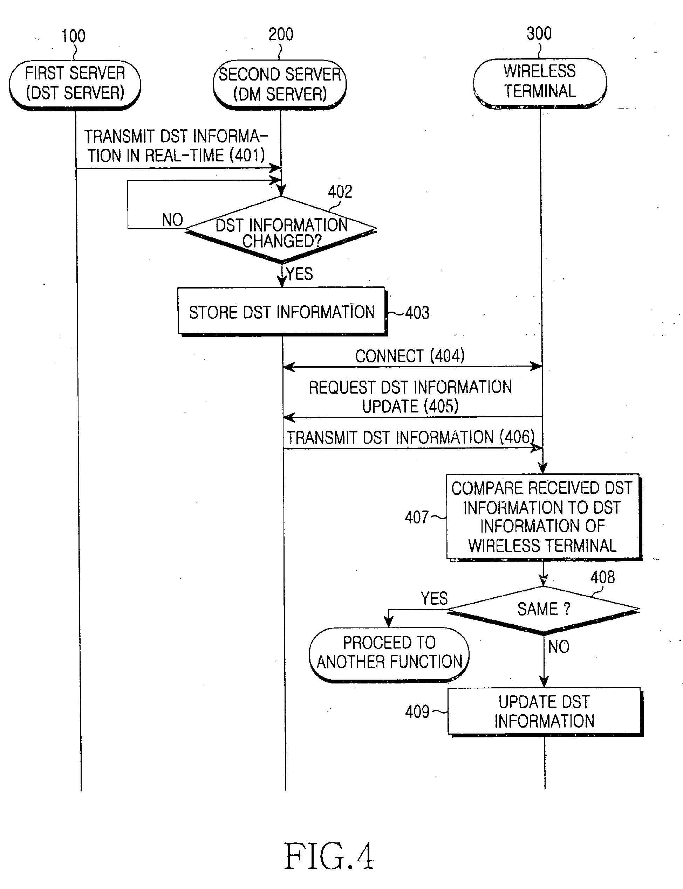

FIG. 4 is a flowchart illustrating a method of updating DST information in a wireless terminal 300 according to a third preferred exemplary embodiment of the present invention, wherein the DST information of the wireless terminal is automatically updated.

Referring to FIG. 4, a first server 100, which is a server for managing and controlling DST information, transmits the DST information to a second server 200 in real-time in step 401. The second server 200, which is a SyncML DM server, receives the DST information from the first server 100 in real-time and compares the DST information received from the first server 100 to previous DST information stored therein. If the DST information received from the first server 100 is different from the previous DST information stored in the second server 200 as the comparison result, the second server 200 senses in step 402 that the DST information has been changed and stores the DST information received from the first server 100 in a memory thereof in step 403.

Alternatively, when DST information is received from the first server 100, the second server 200 can store the received DST information in the memory thereof in step 403 without performing the comparison of step 402.

If a user of the wireless terminal 300 selects a world time menu from among menus of the wireless terminal 300 and selects a DST information update of a specific nation or all nations, the wireless terminal 300 connects to the second server 200 in step 404.

If the second server 200 and the wireless terminal 300 are connected to each other, the wireless terminal 300 requests the second server 200 for DST information of a specific nation or all nations in step 405.

The second server 200, which has received the DST information request from the wireless terminal 300, transmits the DST information stored in the memory thereof to the wireless terminal 300 in step 406.

The wireless terminal 300, which has received the DST information from the second server 200, compares the DST information received from the second server 200 to DST information stored in a memory thereof in step 407.

If the DST information received from the second server 200 is different from the DST information stored in the memory of the wireless terminal 300 as a result of the comparison of step 407, the wireless terminal 300 senses the difference in step 408, updates the DST information stored in the memory thereof based on the received DST information in step 409. If the DST information received from the second server 200 is the same from the DST information stored in the memory of the wireless terminal 300 as a result of the comparison of step 408, another function is performed. The wireless terminal 300 can automatically calculate a current time of a nation having DST with the updated DST information.

As described above, according to the exemplary embodiments of present invention, by automatically or manually updating DST information of a wireless terminal, world time displayed on the wireless terminal can be correctly provided.

Exemplary embodiments of the present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The computer-readable recording medium can also be distributed over network-coupled computer systems so that the computer-readable code is stored and executed in a distributed fashion. Also, functional programs, codes, and code segments for accomplishing the present invention can be easily construed as within the scope of the invention by programmers skilled in the art to which the present invention pertains.

While certain exemplary embodiments of the invention has have been shown and described herein with reference to a certain preferred embodiments thereof, it will be understood by those skilled in the art that various changes in form and details may be made therein without departing from the spirit and scope of the invention as defined by the appended claims and their equivalents.

## Claims

1. A method of updating Daylight Saving Time (DST) information in a wireless terminal, the method comprising the steps of:
transmitting, by a second server receiving DST information, the received DST information to the wireless terminal; and
if the DST information is received from the second server, updating, by the wireless terminal, DST information of the wireless terminal based on the DST information received from the second server.

2. The method of claim 1, wherein the step of transmitting the DST-information to the wireless terminal comprises the steps of:
receiving, by the second server, DST information from a first server managing the DST information; and
if a change occurs in the DST information received from the first server, transmitting, by the second server, the DST information received from the first server to the wireless terminal.

3. The method of claim 2, wherein the step of transmitting the DST information received from the first server to the wireless terminal comprises the steps of:
if a change occurs in the DST information received from the first server, requesting, by the second server, a connection with the wireless terminal by transmitting a message informing of an information change to the wireless terminal
if the second server is connected to the wireless terminal, requesting, by the second server, the wireless terminal for DST information stored in the wireless terminal;
if the DST information stored in the wireless terminal is received, comparing, by the second server, the DST information received from the wireless terminal to the DST information received from the first server; and
if the DST information received from the wireless terminal is different from the DST information received from the first server, transmitting, by the second server, the DST information received from the first server to the wireless terminal.

4. The method of claim 2, wherein the step of transmitting the DST information received from the first server to the wireless terminal comprises the steps of:
if a change occurs in the DST information received from the first server, requesting, by the second server, a connection with the wireless terminal by transmitting a message informing of an information change to the wire less terminal; and
if the second server is connected to the wireless terminal, transmitting, by the second server, the DST information received from the first server to the wireless terminal.

5. The method of claim 1, wherein the updating DST information of the wireless terminal comprises the steps of:
if the DST information is received from the second server, comparing, by the wireless terminal, the DST information received from the second server to the DST information of the wireless terminal; and
if the DST information received from the second server is different from the DST information of the wireless terminal, updating, by the wireless terminal, the DST information of the wireless terminal based on the DST information received from the second server.

6. The method of claim 1, further comprising:
requesting, by the second server, the wireless terminal for DST information update result information; and
transmitting, by the wireless terminal, the DST information update result information.

7. The method of claim 1, wherein the second server is a Synchronization Markup Language (SyncML) Device Management (DM) server.

8. The method of claim 1, wherein the DST information is received in real time by the second server.

9. The method of claim 2, further comprising:
if DST information, which is received by a second server, has changed, storing the changed DST information in the second server.

10. A method of updating Daylight Saving Time (DST) information in a wireless terminal, the method comprising the steps of:
if DST information, which is received by a second server, has changed, requesting, by-the second server, a connection with the wireless terminal by transmitting a message informing of the DST information change;
if the second server is connected to the wireless terminal, requesting, by the second server, DST information stored in the wireless terminal;
if the DST information of the wireless terminal is received, comparing, by the second server, the changed DST information to the DST information of the wireless terminal;
if the changed DST information is different from the DST information of the wireless terminal, transmitting, by the second server, the changed DST information-to the wireless terminal; and
if the DST information is received from the second server, updating, by the wireless terminal, the DST information of the wireless terminal based on the received DST information.

11. The method of claim 10, further comprising:
requesting, by the second server, DST information update result information from the wireless terminal; and
transmitting, by the wireless terminal, the DST information update result information.

12. The method of claim 10, wherein the second server is a Synchronization Markup Language (SyncML) Device Management (DM) server.

13. The method of claim 10, wherein the second server receives DST information in real-time from a first server managing DST information.

14. The method of claim 10, further comprising:
if DST information, which is received by a second server, has changed, storing the changed DST information in the second server.

15. A method of updating Daylight Saving Time (DST) information in a wireless terminal, the method comprising the steps of:
if DST information, which is received by a second server, has changed, requesting, by the second server, a connection with the wireless terminal by transmitting a message informing of the DST information change;
if the second server is connected to the wireless terminal, transmitting, by the second server, the changed DST information to the wireless terminal; if the DST information is received from the second server, comparing, by the wireless terminal, the DST information received from the second server to DST information of the wireless terminal;
if the DST information received from the second server is different from the DST information of the wireless terminal, updating, by the wireless terminal, the DST information of the wireless terminal based on the DST information received from the second server.

16. The method of claim 15, wherein the second server is a Synchronization Markup Language (SyncML) Device Management (DM) server.

17. The method of claim 15, wherein the second server receives DST information in real-time from a first server managing DST information.

18. A method of updating Daylight Saving Time (DST) information in a wireless terminal, the method comprising the steps of:
requesting, by the wireless terminal, an update of DST information from a second server;
if the DST information update request is received from the wireless terminal, transmitting, by the second server, DST information to the wireless terminal; and
if the DST information is received from the second server, updating, by the wireless terminal, DST information of the wireless termini based on the DST information received from the second server.

19. The method of claim 18, wherein the second server is a Synchronization Markup Language (SyncML) Device Management (DM) server.

20. The method of claim 18, wherein the second server receives DST information in real-time from a first server managing DST information.

21. The method of claim 18, wherein the updating DST information of the wireless terminal comprises the steps of:
if the DST information is received from the second server, comparing, by the wireless terminal, the DST information received from the second server to the DST information of the wireless terminal; and
if the DST information received from the second server is different from the DST information of the wireless terminal, updating, by the wireless terminal, the DST information of the wireless terminal based on the DST information received from the second server.

22. A method of updating Daylight Saving Time (DST) information in a wireless terminal, the method comprising the steps of:
receiving, by the wireless terminal, DST information from a server; updating, by the wireless terminal, the DST information-of the wireless terminal based on the DST information received from the server;
receiving, by the wireless terminal, a request for DST information update result information from the server; and
transmitting, by the wireless terminal, the DST information update result information to the server.

23. The method of claim 22, wherein when the server is a Synchronization Markup Language (SyncML) Device Management (DM) server.
